# EUROPEAN PATENT SPECIFICATION

(11) **EP 1 181 259 B1**
(45) Date of publication and mention of the grant of the patent: **29.12.2004**
(21) Application number: 00929731.8
(22) Date of filing: 24.05.2000
(51) Int. Cl.: C04B 35/66, F27D 1/04, F27D 3/02, F27D 1/12, F16L 59/02, F16L 59/14, C04B 14/28

(54) **REFRACTORY COATING FOR COOLED PIPES**
FEUERFESTE BESCHICHTUNG FÜR GEKÜHLTE ROHRE
REVETEMENT REFRACTAIRE POUR CONDUITES A REFROIDISSEMENT

(30) Priority: 27.05.1999 IT BA990023
(43) Date of publication of application: 27.02.2002
(73) Proprietor: Isolcover S.R.L., 74100 Taranto (IT)
(72) Inventor: TURE, Antonio, I-74020 Leporano (IT)
(86) International application number: PCT/IB2000/000699
(87) International publication number: WO 2000/073242

(56) References cited:
- DE-A- 2 354 883
- DE-A- 2 435 001
- DE-A- 2 740 877
- DE-A- 2 805 098
- DE-A- 3 203 604
- US-A- 4 393 569

## Description

### Technical field

The present invention relates to a refractory coating for pipes forming the structure of furnaces for heating steel semi finished products.

The furnaces for heating steel semi finished products (bars, pipes, steel sheets, etc.) usually comprise a bearing structure made of pipes, cooled by water or other cooling fluids. Since the working temperatures in these furnaces exceeds 1300°C, pipes needs to be covered by a refractory coating to reduce heat losses, that is heat absorptions by the cooling fluid. The known pipe coatings are made of concrete castings, prefabricated concrete, cupels in ceramic fiber or other refractory material.

The known applications, however, suffer several disadvantages: the concrete castings, having a high thermal conductivity, need very long laying time; on the contrary, ceramic fiber coatings, which have a low thermal conductivity, are highly toxic.

### Disclosure of the invention

The invention solves the above mentioned problems thanks to the fact that it is a refractory coating or cupel for cooled pipes which is made of a metallic structure (steel sheet or wire net) and an additived, prefabricated concrete, characterised by a low thermal conductivity. Another aim of the invention is to further reduce the thermal conductivity by using a thin layer of ceramic fiber and/or other suitable material (e.g. insulating concrete) between the steel sheet and the concrete; not being in sight, the ceramic fiber has no toxicity problems.

According to a subsequent aim, the invention, in different practice examples, also solves the problem of the anchorage of the coating to the pipes.

These and other advantages will be pointed out in the detailed description of the invention that will refer to the figures of tables 1/2 and 2/2 in which different practice examples have been shown. All are examplifying and not restrictive.

### Way of carrying out the invention

With reference to the above mentioned tables:
- Figure 1 shows the front view of the piping structure
- Fig. 2 shows a first embodiment of the refractory coating with the bolted anchorage;
- Fig. 3 shows a second embodiment of the refractory coating with the hinged anchorage;
- Fig. 4 shows a third embodiment of the refractory coating without the steel sheet and with hinged anchorage.

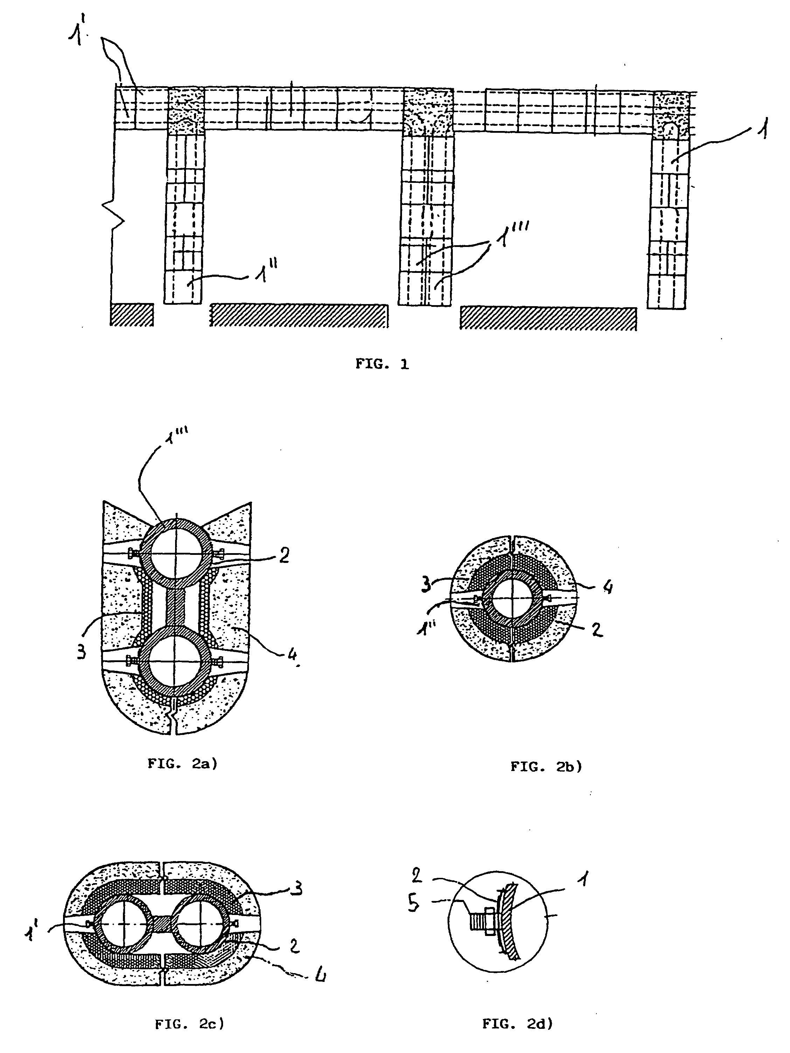

With reference to Fig. 1, a generic supporting pipe is shown with 1. The layout is organised with two horizontal pipelines 1' and vertical struts (in single 1" or in double pipeline 1"'). Therefore, the refractory coating covers one or two pipes and is made of prefabricated blocks.

In Fig. 2 a first embodiment of the invention in the different assembling realisations (Figs. 2a, 2b, 2c) is shown. The single block is made of sheet steel 2 (covering the single pipe or two pipes) on which several metallic anchorages for the refractory concrete has been applied, an optional layer of ceramic fiber and/or other suitable material (e.g. insulating concrete) 3, and a layer of prefabricated concrete 4, with the additive. Said additive is very similar to the one described in the European Patent No. 0 505 542. It comprises several carbonates according to the following weight percentages after calcinations: 0-1% Fe₂O₃, 65-80% CaO, 20-30% SiO₂, 0-2% Al₂O₃, e 0-1% MgO. The prefabricated elements are anchored to the pipes by means of threated bolts 5 (fig. 2d).

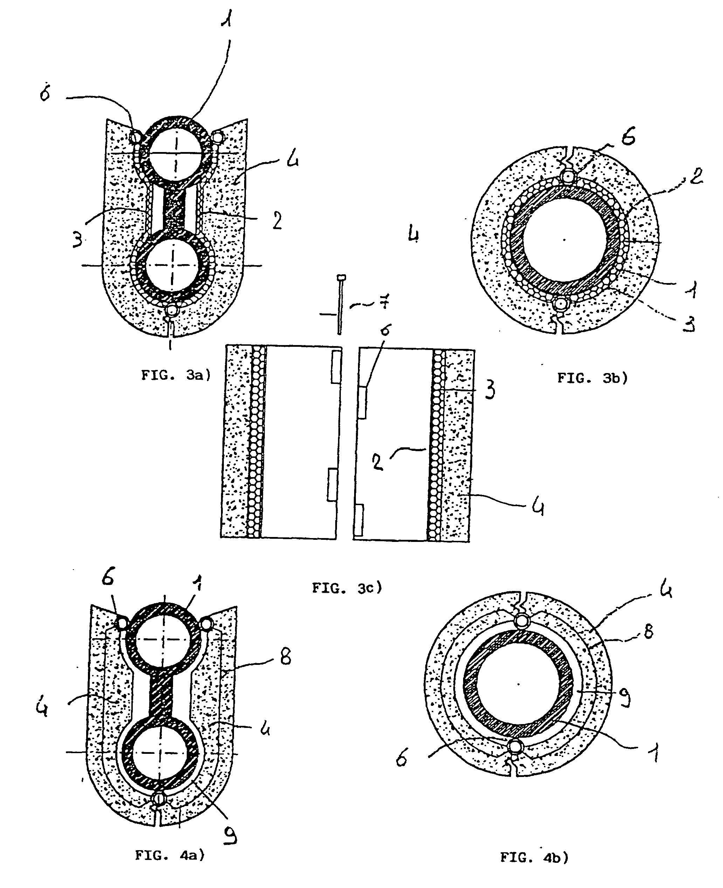

In Fig. 3 a second embodiment of the invention in the different assembling realisations (Figs. 3a, 3b) is shown. As in the first example, the single block is made of a sheet steel 2 (covering the single pipe or two pipes), an optional layer of ceramic fiber and/or other suitable material (e.g. insulating concrete) 3 and a layer of prefabricated concrete 4, with the additive. The prefabricated elements are anchored to the pipes by means of hinges 6 with hinge pins 7 (Fig. 3c).

In Fig. 4 a third embodiment of the invention in the different assembling realisations (Figs. 4a, 4b) is shown. The single block is made of a metallic wire net 8, which is the core of the prefabricated concrete 4. While in the previous examples the cupels adhere to the pipes, in this case a hollow space 9 is created and filled with insulating material like ceramic fiber and/or other suitable material (e.g. insulating concrete). On the ends of the metallic wire net the hinges 6 have been put. The hinged system is the same of the previous example (Fig. 3c).

## Claims

1. Refractory coating for piping, cooled by water or other cooling fluids and forming the structure of furnaces for heating bars, pipes or steel sheets; said refractory coating is made of a metallic structure (steel sheet or wire net) and prefabricated concrete, with said metallic structure being placed around the pipes and the prefabricated concrete attached thereto, **characterised by** the fact that said prefabricated concrete contains an additive, which composition after calcinations is: 0-1% Fe₂O₃, 65-80% CaO, 20-30% SiO₂, 0-2% Al₂O₃, e 0-1% MgO.

2. Refractory coating according to claim 1, **characterised by** the fact that a thin layer of ceramic fiber and/or other suitable material (e.g. insulating concrete) can be inserted between the steel sheet and the concrete to further reduce the thermal conductivity.

3. Refractory coating according to one of the previous claims, wherein the steel sheet can cover a single pipe embodiment or a two-pipes embodiment.

4. Refractory coating, according to one of the previous claims, made of steel sheet (covering the single pipe or two pipes) on which several metallic anchorages for the prefabricated concrete has been applied, an optional layer of ceramic fiber and/or other suitable material (e.g. insulating concrete), and a layer of prefabricated concrete, with the additive; said coating being anchored to the pipes by means of threated bolts.

5. Refractory coating according to claim 4, where a thin layer of ceramic fiber and/or other suitable material (e.g. insulating concrete) is inserted between the steel sheet and the concrete.

6. Refractory coating according to one of the claim from 1 to 3, made of a steel sheet (covering the single pipe or two pipes) on which several metallic anchorages for the prefabricated concrete has been applied, an optional layer of ceramic fiber and/or other suitable material (e.g. insulating concrete), and a layer of prefabricated concrete, with the additive; said coating being anchored to the pipes by means of hinges with hinge pins.

7. Refractory coating according to claim 6, where a thin layer of ceramic fiber and/or other suitable material (e.g. insulating concrete) is inserted between the steel sheet and the concrete.

8. Refractory coating according to one of the claim from 1 to 3, made of a metallic wire net, which is the core of the additived prefabricated concrete, being the so created hollow space (between pipes and concrete) filled with insulating materials like ceramic fiber and/or other suitable material (e.g. insulating concrete); said coating being anchored to the pipes by means of hinges with hinge pins.

## Patentansprüche

1. Feuerfeste Beschichtung für eine Rohrleitung, die durch Wasser oder andere Kühlfluide gekühlt wird und die Struktur von Öfen für das Erhitzen von Stäben, Rohren oder Stahlblechen bildet; wobei die feuerfeste Beschichtung aus einer Metallstruktur (Stahlblech oder Drahtgeflecht) und Fertigbeton hergestellt ist, wobei die Metallstruktur um die Rohre herum angebracht und der Fertigbeton daran befestigt wird, **gekennzeichnet durch** die Tatsache, dass der Fertigbeton ein Zusatzmittel enthält, dessen Zusammensetzung nach dem Calcinieren wie folgt ist: 0-1 % Fe₂O₃, 65-80 % CaO, 20-30 % SiO₂, 0-2 % Al₂O₃ und 0-1 % MgO.

2. Feuerfeste Beschichtung nach Anspruch 1, **gekennzeichnet durch** die Tatsache, dass eine dünne Schicht Keramikfaser und/oder eines anderen geeigneten Materials (z.B. Isolierbeton) zwischen das Stahlblech und den Beton eingefügt werden kann, um die Wärmeleitfähigkeit noch weiter zu reduzieren.

3. Feuerfeste Beschichtung nach einem der vorhergehenden Ansprüche, wobei das Stahlblech eine einzige Rohrausführungsform oder eine Zweiröhrenausführungsform bedecken kann.

4. Feuerfeste Beschichtung nach einem der vorhergehenden Ansprüche, die aus (das einzelne Rohr oder zwei Rohre bedeckendem) Stahlblech, an das mehrere Metallverankerungen für den Fertigbeton angebracht sind, einer wahlweisen Schicht Keramikfaser und/oder eines anderen geeigneten Materials (z.B. Isolierbeton) und einer Schicht Fertigbeton mit dem Zusatzmittel hergestellt ist; wobei die Beschichtung durch Gewindebolzen an den Rohren verankert ist.

5. Feuerfeste Beschichtung nach Anspruch 4, wobei eine dünne Schicht Keramikfaser und/oder eines anderen geeigneten Materials (z.B. Isolierbetons) zwischen das Stahlblech und den Beton eingefügt ist.

6. Feuerfeste Beschichtung nach einem der Ansprüche 1 bis 3, die aus (das einzelne Rohr oder zwei Rohre bedeckendem) Stahlblech, an das mehrere Metallverankerungen für den Fertigbeton angebracht sind, einer wahlweisen Schicht Keramikfaser und/oder eines anderen geeigneten Materials (z.B. Isolierbeton) und einer Schicht Fertigbeton mit dem Zusatzmittel besteht; wobei die Beschichtung durch Scharniere mit Scharnierstiften an den Rohren verankert ist.

7. Feuerfeste Beschichtung nach Anspruch 6, wobei eine dünne Schicht Keramikfaser und/oder eines anderen geeigneten Materials (z.B. Isolierbetons) zwischen das Stahlblech und den Beton eingefügt ist.

8. Feuerfeste Beschichtung nach einem der Ansprüche 1 bis 3, die aus einem Metalldrahtgeflecht hergestellt ist, das der Kern des mit Zusatzmittel versehenen Fertigbetons ist, bei dem es sich um den so gebildeten Hohlraum (zwischen den Rohren und dem Beton) handelt, der mit Isoliermaterialien wie Keramikfaser und/oder einem anderen geeigneten Material (z.B. Isolierbeton) gefüllt ist; wobei die Beschichtung durch Scharniere mit Scharnierstiften an den Rohren verankert ist.

## Revendications

1. Revêtement réfractaire pour canalisation, refroidi par de l'eau ou d'autres liquides refroidisseurs et constituant la structure des fours pour les barres chauffantes, les tuyaux ou les tôles d'acier ; ledit revêtement réfractaire est constitué d'une structure métallique (tôle d'acier ou fil métallique) et de béton préfabriqué, ladite structure métallique étant placée autour des tuyaux et le béton préfabriqué étant fixé à celle-ci, **caractérisé en ce que** ledit béton préfabriqué contient au additif, dont la composition après calcinations est : 0 à 1 % de Fe₂O₃, 65 à 80 % de CaO, 20 à 30 % de SiO₂, 0 à 2 % d'Al₂O₃, et 0 à 1 % de MgO.

2. Revêtement réfractaire selon la revendication 1, **caractérisé en ce qu'**une fine couche de fibre céramique et/ou d'un autre matériau approprié (par exemple du béton isolant) peut être insérée entre la tôle d'acier et le béton pour réduire davantage la conductivité thermique.

3. Revêtement réfractaire selon l'une des revendications précédentes, dans lequel la tôle d'acier peut couvrir un mode de réalisation à un tuyau ou un mode de réalisation à deux tuyaux.

4. Revêtement réfractaire selon l'une des revendications précédentes, constitué d'une tôle d'acier (couvrant le tuyau simple ou les deux tuyaux) sur laquelle plusieurs ancrages métalliques relatifs au béton préfabriqué sont appliqués, d'une couche optionnelle de fibre céramique et/ou d'un autre matériau approprié (par exemple du béton isolant), et d'une couche de béton préfabriqué, avec l'additif ; ledit revêtement étant fixé aux tuyaux à l'aide de boulons filetés.

5. Revêtement réfractaire selon la revendication 4, dans lequel une fine couche de fibre céramique et/ou d'un autre matériau approprié (par exemple du béton isolant) est insérée entre la tôle d'acier et le béton.

6. Revêtement réfractaire selon l'une des revendications 1 à 3, constitué d'une tôle en acier (couvrant le tuyau simple ou les deux tuyaux) sur laquelle plusieurs ancrages métalliques relatifs au béton préfabriqué sont appliqués, d'une couche optionnelle de fibre céramique et/ou d'un autre matériau approprié (par exemple du béton isolant), et d'une couche de béton préfabriqué, avec l'additif ; ledit revêtement étant fixé aux tuyaux à l'aide de charnières équipée de gonds.

7. Revêtement réfractaire selon la revendication 6, dans lequel une fine couche de fibre céramique et/ou d'un autre matériau approprié (par exemple du béton isolant) est insérée entre la tôle d'acier et le béton.

8. Revêtement réfractaire selon l'une des revendications 1 à 3, constitué d'un fil métallique, qui est le coeur du béton préfabriqué additif, l'espace creux ainsi créé (entre les tuyaux et le béton) étant rempli de matériaux isolants tels que de la fibre céramique et/ou un autre matériau approprié (par exemple du béton isolant) ; ledit revêtement étant fixé aux tuyaux au moyen de charnières équipées de gonds.
